# EUROPEAN PATENT APPLICATION

(11) **EP 2 192 341 A1**
(43) Date of publication of application: **02.06.2010**
(21) Application number: 08792381.9
(22) Date of filing: 11.08.2008
(51) Int. Cl.: F21S 2/00, F21V 7/00, F21V 7/09, F21V 29/00, G02F 1/13357, F21Y 101/02

(54) **ILLUMINATING DEVICE FOR DISPLAY DEVICE, DISPLAY DEVICE, AND TELEVISION RECEIVER**

(30) Priority: 24.10.2007 JP 2007276488
(71) Applicant: Sharp Kabushiki Kaisha, Osaka-shi, Osaka 545-8522 (JP)
(72) Inventor: HISAKAWA, Kohji, Osaka 545-8522 (JP)
(74) Representative: Müller-Boré & Partner Patentanwälte
(86) International application number: PCT/JP2008/064398
(87) International publication number: WO 2009/054177

(57) **Abstract**

A lighting device 12 for a display device comprising: a plurality of LED light sources 20, an LED substrate 21 having the plurality of LED light sources 20 mounted thereon, an optical member 15 arranged on a light emission side of the LED sources 20, and a chassis 14 for supporting the plurality of LED light sources 20. The chassis 14 has a cutout 17. The LED substrate 21 is attached to an opposite surface of the chassis 14 from a surface that faces the optical member 15 such that the LED light sources 20 are exposed toward the optical member 15 side through the cutout 17.

## Description

### TECHNICAL FIELD

The present invention relates to a lighting device for a display device, a display device, and a television receiver.

### BACKGROUND ART

For example, a liquid crystal panel used in a liquid crystal display device such as a liquid crystal television is not self-luminous. Because of this, a backlight device is necessary as an external light source that supplies illumination light to the liquid crystal panel. As the liquid crystal display device has been being upsized these days, improvement in the brightness and light uniformity of the backlight device has been required. In order to meet this requirement, a backlight device having an LED (light emitting diode) as the light source is receiving attention.

By the way, the LEDs have a higher heat generation rate, and the backlight device including LED substrates having a large number of LEDs disposed in a two-dimensional array can be heated to a high-temperature state due to heat generation by the LEDs. In this case, members that the backlight device includes can be deformed, deteriorated, etc., causing not uniform supply of the illumination light to the liquid crystal panel. This is a cause of color irregularities etc. Therefore, the backlight device having the LEDs as the light source includes heat releasing devices that releases the heat generated by the LEDs with a higher degree of efficiency (for example, see Patent Document 1).
[Patent Document 1] Japanese Unexamined Patent Application Publication No. 2006-278041

### (Problem to Be Solved by the Invention)

The above-mentioned Patent Document 1 discloses a back panel having a heat releasing ability and attached to a back-face side of a backlight device. Specifically, the document discloses the back panel, wherein: an accommodation groove is formed by press molding in a face of a metal-sheet panel; a heat pipe thermally connected to a metal-sheet member is accommodated in the accommodation groove; further, a heat sink consisting of a base and a fin is disposed on the other face of the metal-sheet panel; and an opening portion is provided so that a part of the base is exposed to the heat pipe side. Thus, the back panel is thermally connected directly to the LED substrates while having the part of the base and the heat pipe, which are substantially on a same plane, as a heat receiving face.

By the way, in a case of operating repair or replacement of the LED substrates in the display device having such a backlight device allocated therein, it is conceivable that two means as follows can be adopted. One of the two means is to: remove the heat releasing devices from a back side (opposite from the display panel) of the backlight device one by one; cut off the connection to the LED substrates; and then remove the LED substrates. The other means is to: remove the display panel, optical members, etc. one after another from a display-face side of the display device; and reach the LED substrates. Both means require the work to remove various members one after another, and thus, the work taking quite much effort is required in order to reach the LED substrates and remove them.

### DISCLOSURE OF THE INVENTION

The present invention was made on a basis of the circumstances as explained above, and an object thereof is to provide a lighting device for a display device that allows for easier repairing work for an LED substrate and also has a high heat releasing capability. Another object of the present invention is to provide a display device and a television receiver that include such a lighting device so as to allow for easier maintenance.

### (Means for Solving the Problem)

In order to solve the above-explained problem, a lighting device for a display device includes a plurality of LED light sources, an LED substrate having the plurality of LED light sources mounted thereon, an optical member arranged on a light emission side of the LED sources, and a chassis for supporting the plurality of LED light sources. The chassis has a cutout. The LED substrate is attached to an opposite surface of the chassis from a surface that faces the optical member such that the LED light sources are exposed toward the optical member side through the cutout.

In such a lighting device for a display device, the LED substrate is attached to an opposite surface of the chassis from a surface that faces the optical member. Therefore, the LED substrate can be removed or attached without much effort and thus it can be easily replaced.
In a known configuration, an LED substrate is provided on a surface of a chassis, the surface that is opposed to the optical member. According to this configuration, when LEDs or their peripheral components (a lead frame, wires, etc.) become defective or dissipated and the LED substrate needs to be replaced, a lot of work is required. For example, removing a display panel that is integrally fixed to the chassis, optical members, etc. one after another until the LED substrate is uncovered, and then removing the LED substrate.
The lighting device for a display device of the present invention is configured such that the LED substrate can be attached to an opposite surface of the chassis from a surface that faces the optical member. Therefore, during replacement of the LED substrate, it can be easily replaced without removing the other parts.

Furthermore, in order to provide a means for removing the LED substrate, the inventor of the present invention has come to a configuration in which the chassis has a cutout, and the LED substrate is attached to the cassis with the LED light sources exposed to the optical member side through the cutout. In this configuration, even when the LED substrate is attached to the opposite surface of the chassis from the surface that faces the optical member, the LED light sources mounted on the LED substrate are exposed on the surface that faces the optical member through the cutout of the chassis. As a result, the light supplied from the LED light sources enters the optical member and then the display panel when it is attached to the lighting device for a display device.

Furthermore, the LED substrate is attached to the opposite surface of the chassis from the surface that faces the optical member. Therefore, the LED substrate is exposed to the outside. With this configuration, heat generated by the LED light sources can be released directly to the outside without conducting through the chassis. This can produce a higher heat releasing effect.

Furthermore, the lighting device for a display device further comprises a heat sink provided on the LED substrate for releasing heat that is generated accompanying lighting of the plurality of LED light sources.
By providing the heat sink provided on the LED substrate, deformation or deterioration of the members due to high temperature in the lighting device for a display device is reduced. The heat sink may be mounted directly on a lead frame provided on a surface of the LED substrate. Moreover, it may have a known configuration that includes a base and fins.

Furthermore, the heat sink may be mounted on a surface of the LED substrate, the surface opposite from the surface on which the LED light sources are mounted.
In this case, the heat sink is exposed on the surface of the chassis opposite from the surface that faces the optical member. That is, the heat sink is exposed to the outside of the lighting device for a display device. As a result, the heat generated from the LED light sources is effectively dissipated without decreasing the heat releasing ability.

Furthermore, the LED substrate has a substrate portion on which the LED light sources are mounted, and the heat sink is made of a material having a thermal conductivity higher than a thermal conductivity of the substrate portion of the LED substrate.
In this case, the heat generated from the LED light sources can be effectively conducted to the heat sink. Therefore, the cooling efficiency thereof is improved.

Furthermore, a reflector having a reflective surface that faces toward the optical member is provided on a surface of the LED substrate, the surface on which the LED light sources are mounted.
By providing the reflector for reflecting the emitted light from the LED light sources to the optical member side, the light supplied from the LED light sources is effectively used. As a result, high brightness can be achieved and dark areas can be reduced, and thus uniform illumination light is provided.

Furthermore, the reflector is made of metal, and a light reflectance of the reflector is higher than a light reflectance of the LED substrate.
Because of the higher light reflectance of the reflector, the emitted light from the LED light sources can be more efficiently reflected.

Furthermore, at least the reflective surface of the reflector is painted in a pale color including white.
By painting the reflective surface of the reflector in a pale color including white that is more likely to reflect light, the light reflectivity of the reflector can be improved. Therefore, light emitted from the LEDs can be effectively used.

Furthermore, the reflector is made of resin, and a light reflectance of the reflector is higher than a light reflectance of the LED substrate.
By making the reflector by resin molding, the mold ability improves and the light reflectance can be easily adjusted by adding coloring material and the like.

Furthermore, the chassis has an inclined side surface around the cutout that is inclined so as to face toward the optical member.
By inclining the side surface around the cutout, the surface functions as a reflector. That is, because the light emitted from the LED light sources can be reflected toward the optical member by the inclined side surface, the light supplied from the LED light sources can be effectively used. As a result, high brightness can be achieved and dark areas can be reduced, and thus uniform illumination light is provided.

Furthermore, a light reflectance of the inclined side surface is higher than a light reflectance of a portion of the chassis, the portion excluding the inclined side surface.
The higher light reflectance of the inclined side surface further improves the efficiency of reflecting makes it light emitted from the LED light sources.

Furthermore, the inclined side surface is made of resin having light reflectivity.
By applying or adhering the resin having the light reflectivity to the inclined side surface, the light reflectivity of the inclined side surface can be improved. Thus, light emitted from the LEDs can be effectively used.

Furthermore, the inclined side surface is painted in a pale color including white.
By painting the inclined side surface in a pale color including white that is more likely to reflect light, the light reflectivity of the inclined surface can be improved. Thus, light emitted from the LEDs can be effectively used.

Next, in order to solve the above-explained problem, a display device of the present invention comprises the above-explained lighting device for a display and a display panel that provides display using light from the lighting device for a display device.
Because the LED substrate can be easily replaced in this lighting device for a display device, maintenance of such a display device is also easy.

A liquid crystal panel is an example of the display panel. Such a display device can be used for various applications, for example, a television, a desktop display of a personal computer, etc. It is especially preferable for a large screen application.

Furthermore, the television receiver of the present invention is characterized by comprising the above-explained display device.
Because the maintenance of the display device is easy, such a television receiver has high maintainability.

### (Effect of the Invention)

According to the present invention, a lighting device for a display device having a configuration such that the LED substrate can be easily replaced can be provided. Furthermore, the maintenance can be easily performed for the display device and the television receiver of the present invention.

### BRIEF DESCRIPTION OF THE DRAWINGS

Fig. 1 is an exploded perspective view illustrating a schematic configuration of a television receiver of a first embodiment in accordance with the present invention;
Fig. 2 is an exploded perspective view illustrating a schematic configuration of a liquid crystal display device that the television receiver of Fig. 1 includes;
Fig. 3 is a sectional view along line A-A of the liquid crystal display device of Fig. 2;
Fig. 4 is a perspective view illustrating a schematic configuration of an LED substrate that a backlight device includes;
Fig. 5 is an enlarged sectional view of a main part of the backlight device;
Fig. 6 is an explanatory view illustrating an operational effect that the backlight device produces;
Fig. 7 is a perspective view illustrating a schematic configuration of an LED substrate that is attached to a backlight device of a second embodiment in accordance with the present invention;
Fig. 8 is an enlarged sectional view of a main part of the backlight device of the second embodiment;
Fig. 9 is an exploded perspective view illustrating a schematic configuration of a liquid crystal display device of a third embodiment in accordance with the present invention;
Fig. 10 is an exploded perspective view illustrating a schematic configuration of a liquid crystal display device of a fourth embodiment in accordance with the present invention;
Fig. 11 is a view schematically illustrating a section along line B-B of the liquid crystal display device of Fig. 10; and
Fig. 12 is a perspective view illustrating an assembling relationship between LED substrates and the chassis that the backlight device includes.

### (Explanation of Reference Characters)

10... liquid crystal display device (display device); 11... liquid crystal panel (display device); 12... backlight device (lighting device for display device); 14... chassis; 15... optical member; 17... cutout; 17a... inclined face; 20... LED light source; 21,40,60... LED substrate; 22... substrate portion (of LED substrate); 24,50... reflector; 33... heat sink; 50a... reflecting face; TV... television receiver

### BEST MODE FOR CARRYING OUT THE INVENTION

### <First Embodiment>

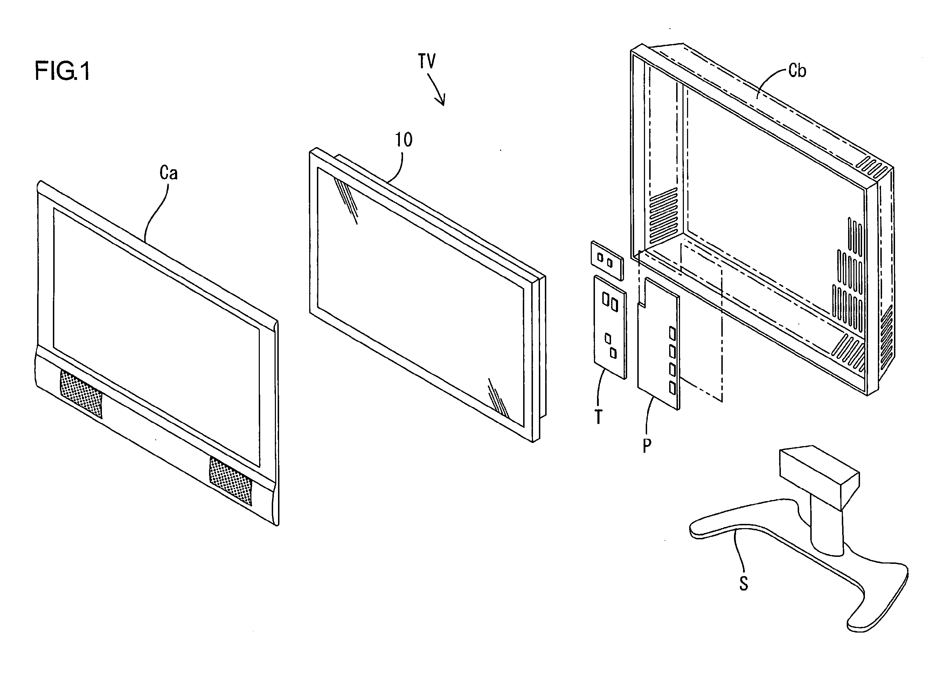

A first embodiment in accordance with the present invention will be explained with reference to Figs. 1 through 6. In this embodiment, a liquid crystal display device 10 will be illustrated as a display device.

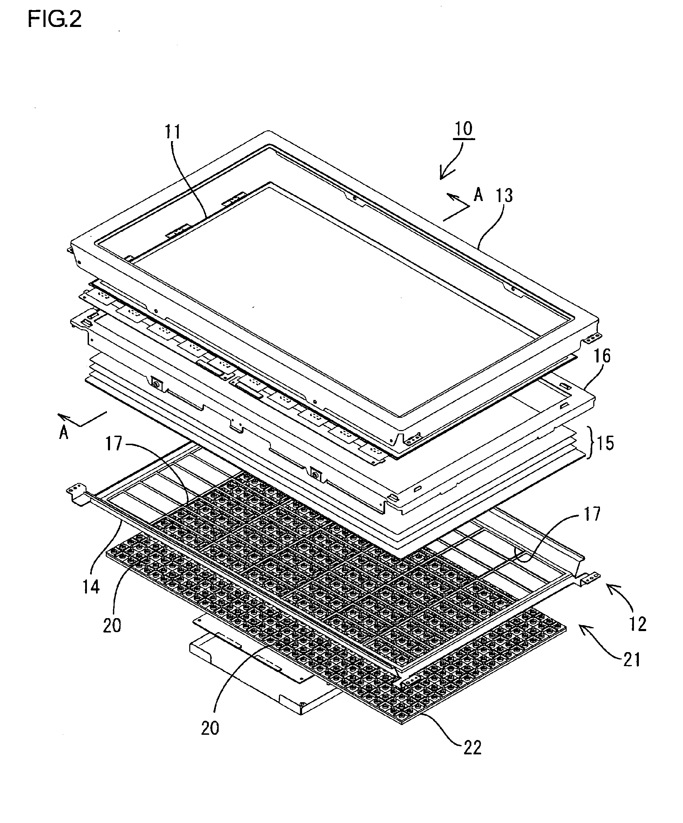

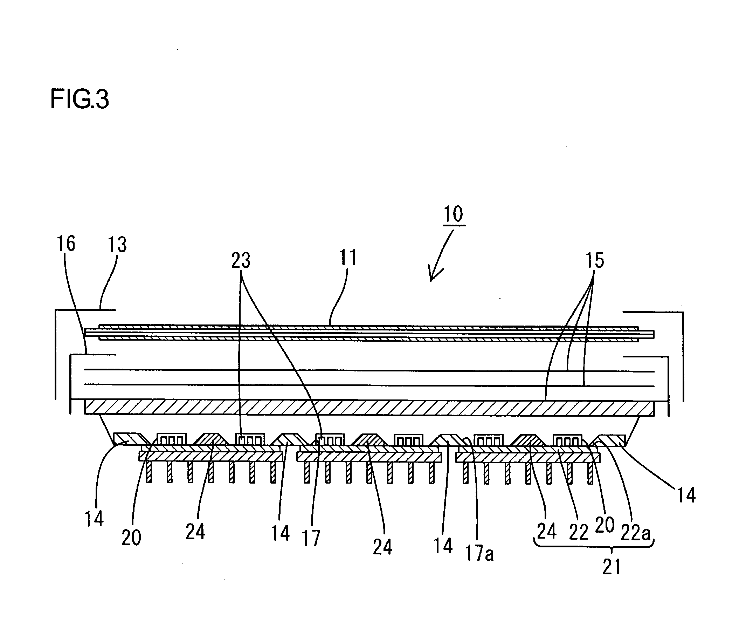

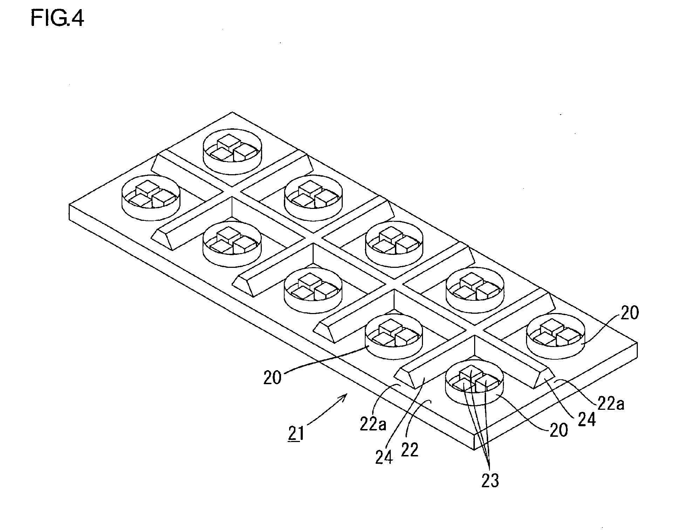

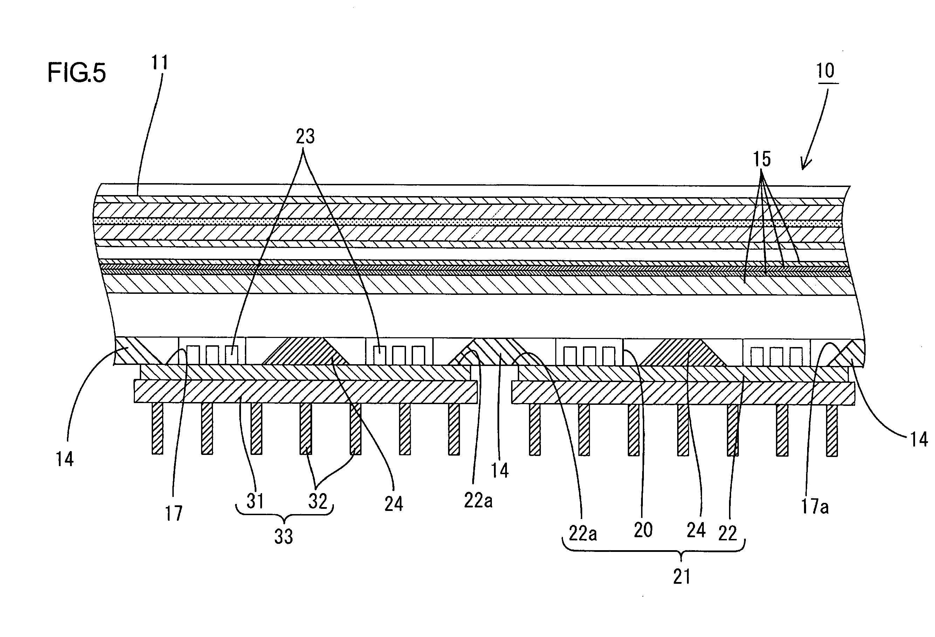

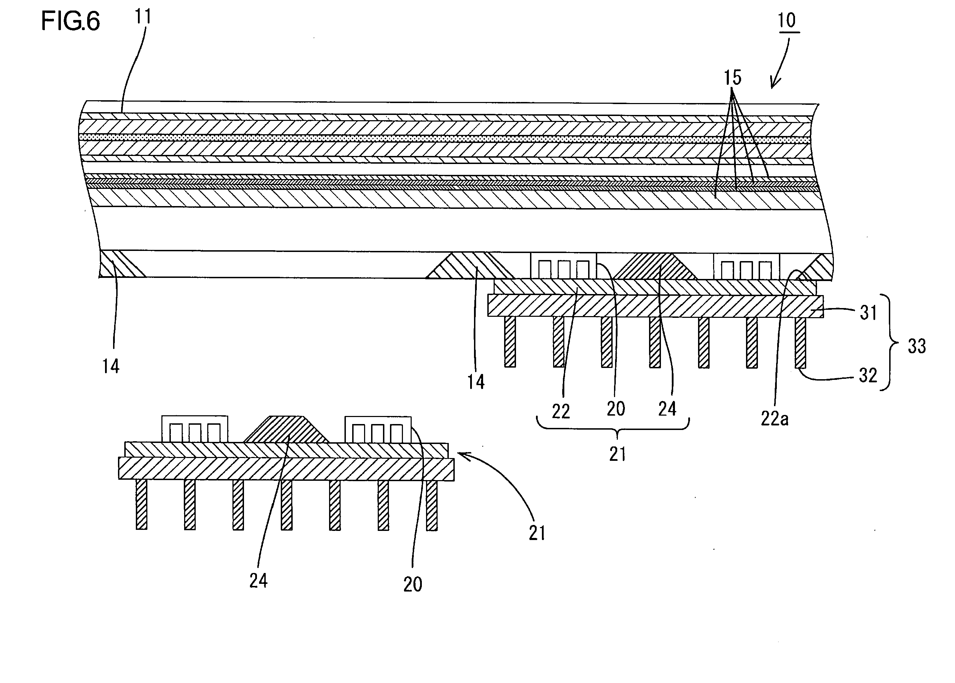

Fig. 1 is an exploded perspective view illustrating a schematic configuration of a television receiver of this embodiment; Fig. 2 is an exploded perspective view illustrating a schematic configuration of a liquid crystal display device that the television receiver of Fig. 1 includes; Fig. 3 is a sectional view along line A-A of the liquid crystal display device of Fig. 2; Fig. 4 is a perspective view illustrating a schematic configuration of an LED substrate that a backlight device includes; Fig. 5 is an enlarged sectional view of a main part of the backlight device; and Fig. 6 is an explanatory view illustrating an operational effect that the backlight device produces.

The television receiver TV of this embodiment is, as illustrated in Fig. 1, is configured by including the liquid crystal display device (display device) 10, a front and back cabinets Ca, Cb, a power source P, a tuner T, and a stand S. The two cabinets Ca, Cb accommodate the liquid crystal display device 10 in a manner holding it therebetween. The liquid crystal display device 10 as a whole has a horizontally oriented oblong shape. As illustrated in Fig 2, the liquid crystal display device 10 includes a liquid crystal panel 11, which is a display panel, and a backlight device (lighting device for display device) 12, which is an external light source. They are integrally held by a bezel 13 etc.

Next, the liquid crystal panel 11 and the backlight device 12 that configure the liquid crystal display device 10 will be explained (see Figs. 2 and 3).
The liquid crystal panel 11 has a configuration of a pair of glass substrates laminated with a gap spaced therebetween. The liquid crystal panel 11 also has liquid crystal enclosed between the two glass substrates. One of the glass substrates is provided with switching elements (for example, TFTs), pixel electrodes, etc. The switching elements are connected to source lines and gate lines that run perpendicular to each other. The pixel electrodes are connected to the switching elements. The other glass substrate is provided with a counter electrode.

The backlight device 12 is a so-called direct backlight device, having a configuration sufficiently provided with a plurality of LED light sources 20 directly behind a back face of a panel face (i.e. a display face) of the liquid crystal panel 11 and along the panel face.

The backlight device 12 includes a chassis 14, a plurality of optical members 15 (a diffuser plate, a diffusing sheet, a lens sheet, and a reflective polarizing plate, in this order from below in the figure), and a frame 16. The chassis 14 has a substantial box shape with the top face side open. The chassis 14 is made of metal. The optical members 15 are attached to the chassis 14 in a manner covering the open portion. The frame 16 is for holding these optical members 15 on the chassis 14. Furthermore, the chassis 14 has a bottom face portion having cutouts 17 formed therein. Via the cutouts 17, the LED light sources 20 are attached. The LED light sources 20 are arranged on LED substrates 21, which will be explained below. Note that, in the backlight device 12, the optical members 15 side of the LED light sources 20 is a light emission side.

Each cutout 17 has a rectangular shape. As illustrated in Fig. 3, side faces on the periphery of the cutout 17 are oriented toward the optical members. More specifically, the side faces of the cutout 17 constitute inclined faces 17a. The inclined faces 17a have an inclination of 45° with respect to the bottom face of the chassis 14 and face upward. Besides, the inclined faces 17a have surfaces having white paint applied thereto. Thus, because of the applied white paint that easily reflects light, a light reflectance of the inclined faces 17a is higher than the light reflectance of portions of the chassis 14, the portions excepting the inclined faces 17a.

As illustrated in Fig. 4, each LED substrate 21 attached to the above-explained chassis 14 is configured by a substrate portion (a mounted substrate) 22 and the LED light sources 20. The substrate portion 22 is made of resin and has a plate shape. Each LED light source 20 has three LED chips 23 secured with resin. The three LED chips 23 emit light of respective single colors of R (red), G (green), and B (blue). As illustrated in Fig. 2, the plurality of LED substrates 21 are arranged in positions superposed on openings formed by the cutouts of the chassis 14.

As illustrated in Fig. 4, the plurality of (in this embodiment, five (in a long-side direction of the substrate portion 22) by two (in a short-side direction)) LED light sources 20 are disposed in lines. These LED light sources 20 have distances therebetween set at regular intervals. Furthermore, a reflector 24 is provided between the LED light sources 20 in an extending manner. The reflector 24 is for reflecting light emitted from the LED light sources 20. Furthermore, the outer side of the arrangement of the LED light sources 20 (a periphery of an upper face of the substrate portion 22) has a substrate upper-face portion 22a having no reflector 24. The substrate upper-face portion 22a is exposed. The LED light sources 20 have the aspect as above.

As illustrated in Fig. 5, the chassis 14 has a face opposed to the optical member 15, and the above-explained LED substrates 21 are screwed up to the chassis 14 from a side (the underside in Fig. 5) opposite from the face opposed to the optical member 15. Note here that groups of the LED light sources 20, which are arranged on the upper faces of the LED substrates 21 (on the optical members 15 side), have the aspect disposed in positions superposed on the cutouts 17 formed in the chassis 14 so that the groups of the LED light sources 20 appear to the optical members 15 side. Furthermore, the substrate upper-face portions 22a of the LED substrates 21 are superposed on portions of the chassis 14, the portions intervening between the cutouts 17.

Furthermore, each LED substrate 21 has a lower face (a face opposite from a face having the LED light sources 20 allocated thereon) having a heat sink 33 attached thereto so as to be capable of conducting heat between the LED substrate 21. The heat sink 33 consists of a base 31 and fins 32. The base 31 is provided in an extending manner along the lower face of the LED substrate 21 and has a plate shape. The fins 32 are provided in a standing manner and integrally with the base 31. Note that, in this embodiment, the heat sink 33 is made of copper, the thermal conductivity thereof being higher in comparison with a thermal conductivity of the substrate portion 22 of the LED substrate 21.

The television receiver TV, the liquid crystal display device 10, and the backlight device 12 of this embodiment, which have the configurations as explained above, produce operational effects as following:
The backlight device 12 of this embodiment has the LED substrates 21 attached to the back-face side (opposite from the face opposed to the optical members 15) of the chassis 14, the LED substrates 21 having the LED light sources 20 arranged thereon in a predetermined manner. Because of this configuration, even in a case where the LED light sources 20 has trouble or has deteriorated, arising a need to replace the LED substrate 21, the LED substrate 21 which needs replacing can be easily removed only by a work to remove the screws engaging the LED substrate 21 with the chassis 14, as illustrated in Fig. 6. This makes it possible to easily perform the replacing work for the LED substrate 21.

Furthermore, the cutouts 17 are formed in the chassis 14, and the LED substrates 21 are attached to the chassis 14 with the LED light sources 20 exposed from the cutouts 17 to the optical members 15 side. Because of this, even in a case where the LED substrates 21 are attached from the back-face side of the chassis 14 (opposite from the face opposed to the optical members 15), the LED light sources 20 can be exposed via the cutouts 17 to the optical members 15 side. As a result of this, light supplied from these LED light sources 20 can be incident on the optical members 15 and the liquid crystal panel 11.

Furthermore, because of the configuration of the LED substrates 21 exposed to the outside of the backlight device 12, heat generated by the LED light sources 20 can be released from the LED substrates 21 directly to the outside air without via the chassis 14. This makes it possible to produce a higher heat releasing effect.

Furthermore, in this embodiment, the LED substrates 21 have the faces having the LED light sources 20 mounted thereto and the faces opposite from the faces having the LED light sources 20 mounted thereto, and the faces opposite from the faces having the LED light sources 20 mounted thereto is provided with the heat sinks 33.
Because the LED light source 20 have a higher heat generation rate, using the LED substrates 21 having the large number of LED light sources 20 arranged thereon can cause a case where the backlight device 12 is heated to a high-temperature state due to the heat generation by the LED light sources 20. In order to avoid this, the LED substrates 21 are provided with the heat sinks 33, so that the heat generated by the LED light sources 20 is conducted through the LED substrates 21 to the heat sinks 33 and then is released by the fins 32 having larger surface areas (see Fig. 5).
Furthermore, specifically in this embodiment, the LED substrates 21 have the faces having the LED light sources 20 mounted thereto and the faces opposite from the faces having the LED light sources 20 mounted thereto, and the heat sinks 33 are provided on the faces opposite from the faces having the LED light sources 20 mounted thereto. The heat sinks 33 are thus exposed to the outside of the backlight device 12. As a result of this, the heat from the LED light source 20 can be released with a higher degree of efficiency without decreasing the heat releasing ability of the heat sinks 33.

Furthermore, in this embodiment, because of the heat sinks 33 made of copper, the thermal conductivity of the heat sinks 33 is higher than that of the substrate portions 22 of the LED substrates 21. Because of this, the heat generated by the LED light sources 20 can be conducted to the heat sinks 33 with a higher degree of efficiency, still more improving the cooling efficiency thereof.

Furthermore, in this embodiment, the LED substrates 21 have the faces having the LED light sources 20 arranged thereon, and the face is provided with the reflectors 24.
Thus, because of the reflectors 24 provided for reflecting the emission light from the LED light sources 20 to the optical members 15 side, the light supplied from the LED light sources 20 is effectively used. This makes it possible to achieve high brightness and, at the same time, to eliminate dark parts and achieve uniformity of the illumination light.

Furthermore, in this embodiment, the side faces of the cutouts 17 formed in the chassis 14 constitute the inclined faces 17a oriented toward the optical members 15.
With this, out of the light emitted from the LED light sources 20, the light which has reached the inclined faces 17a of the cutouts 17 is reflected toward the optical members 15 by the inclined faces 17a. As a result of this, the light supplied from the LED light sources 20 is effectively used. This makes it possible to achieve high brightness and, at the same time, to eliminate dark parts and achieve uniformity of the illumination light.

Furthermore, in this embodiment, the inclined faces 17a are applied with the white or near to white paint, and the light reflectance of the inclined faces 17a is higher than the light reflectance of the portions of the chassis 14, the portions excepting the inclined faces 17a.
Thus, because of the white or near to white paint that easily reflects light is applied, the light reflectivity of the inclined faces 17a can be improved, and the light reflectance thereof is higher than the light reflectance of the portions of the chassis 14, the portions excepting the inclined faces 17a. This makes it possible to reflect the emission light from the LED light sources 20 with a still higher degree of efficiency.

### <Second Embodiment>

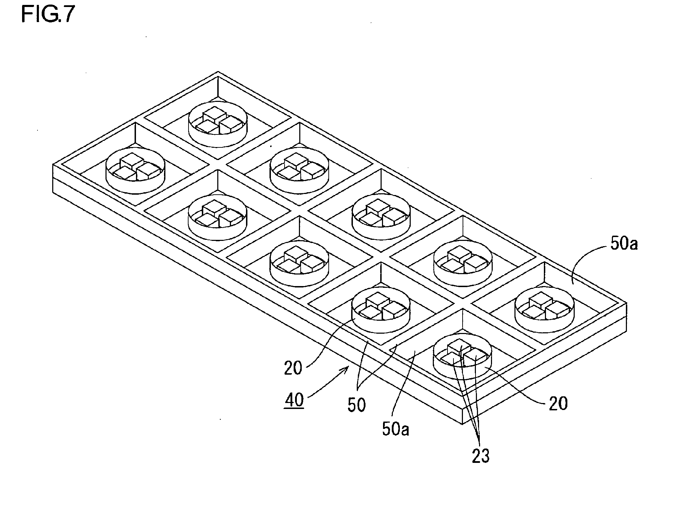

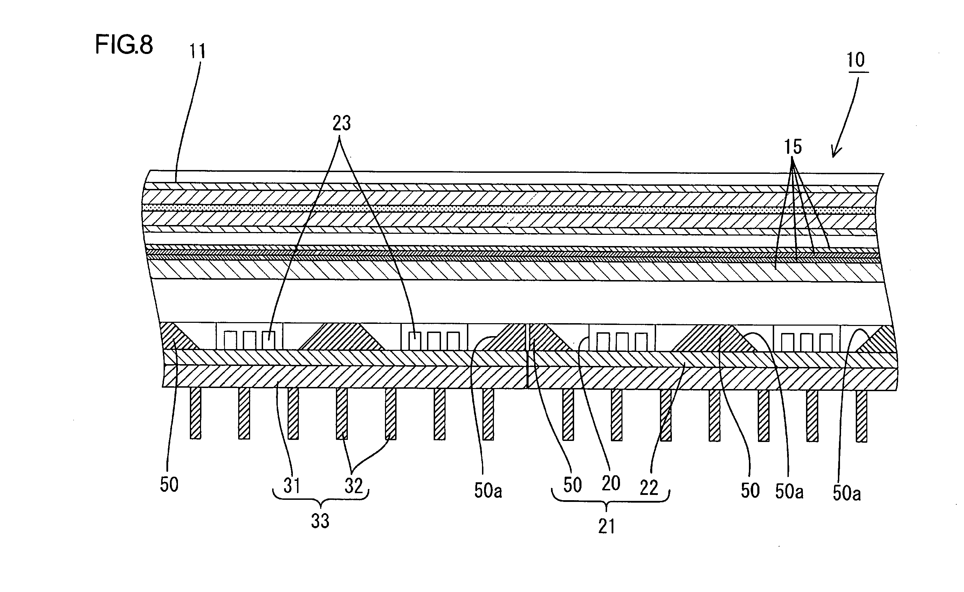

Next, a second embodiment in accordance with the present invention will be explained with reference to Figs. 7 and 8. The difference from the above-explained first embodiment is in that the LED substrates alone are provided with the reflectors that are a light reflection mechanism. Other aspects are similar to the above-explained embodiment. Portions identical with the above-explained embodiment will be designated with the identical reference characters, while repetitive explanations will be omitted.
Fig. 7 is a perspective view illustrating a schematic configuration of an LED substrate that is attached to a backlight device of this embodiment. Fig. 8 is an enlarged sectional view of a main part of the backlight device.

As illustrated in Fig. 7, each LED substrate 40 has a configuration of a face having the LED light sources 20 arranged thereon. Specifically, five (in the long-side direction of the LED substrate 40) by two (in the short-side direction) LED light sources 20 are disposed in lines. Spaces between these LED light sources 20, as well as an area enclosing the group of the LED light sources 20, are provided with reflectors 50 in an extending manner.

The chassis 14 has the face opposed to the optical members 15, and Fig. 8 illustrates the above-explained LED substrates 40 in a state attached to the chassis 14 from the side opposite from the face opposed to the optical members 15.
The LED substrates 40 are disposed with the adjacent LED substrates 40 close to each other. Besides, the LED light sources 20 and the reflectors 50 appear to the optical members 15 side via the cutouts 17 formed in the chassis 14.

Each reflector 50 have reflective faces 50a on the LED light sources 20 group sides. These reflective faces 50a are oriented toward the optical members 15 so as to reflect the light supplied from the group of the LED light sources 20 toward the optical members 15. On the other hand, an opposite faces of the reflectors 50 from the LED light sources 20 group side are faces standing from the LED substrate 21. Thus, a vertical section of each reflector 50 is substantially trapezoidal.
Note that, in this embodiment, the reflectors 50 are made of metal, and the reflective faces 50a have the white or near to white paint applied thereto. Because of this, the light reflectance of the reflectors 50 is higher than the light reflectance of the LED substrates 40.

Such a backlight device 12 produces operational effects as follows:
In this embodiment, the LED substrates 40 has the faces having the LED light sources 20 arranged thereon, and the faces are provided with the reflectors 50 having the reflective faces 50a oriented toward the optical members 15.
Thus, because of the reflectors 50 provided for reflecting the emission light from the LED light sources 20 to the optical members 15 side, the light supplied from the LED light sources 20 is effectively used. This makes it possible to achieve high brightness and, at the same time, to eliminate dark parts and achieve uniformity of the illumination light.

Furthermore, in this embodiment, the reflective faces 50a are applied with the white or near to white paint, and the light reflectance of the light reflective faces 50a is higher than the light reflectance of the LED substrates 40.
Thus, because of the applied the white or near to white paint that easily reflects light, the light reflectivity of the reflective faces 50a can be improved, and the light reflectance thereof is higher than the light reflectance of the LED substrates 40. This makes it possible to reflect the emission light from the LED light sources 20 with a still higher degree of efficiency.

### <Third Embodiment>

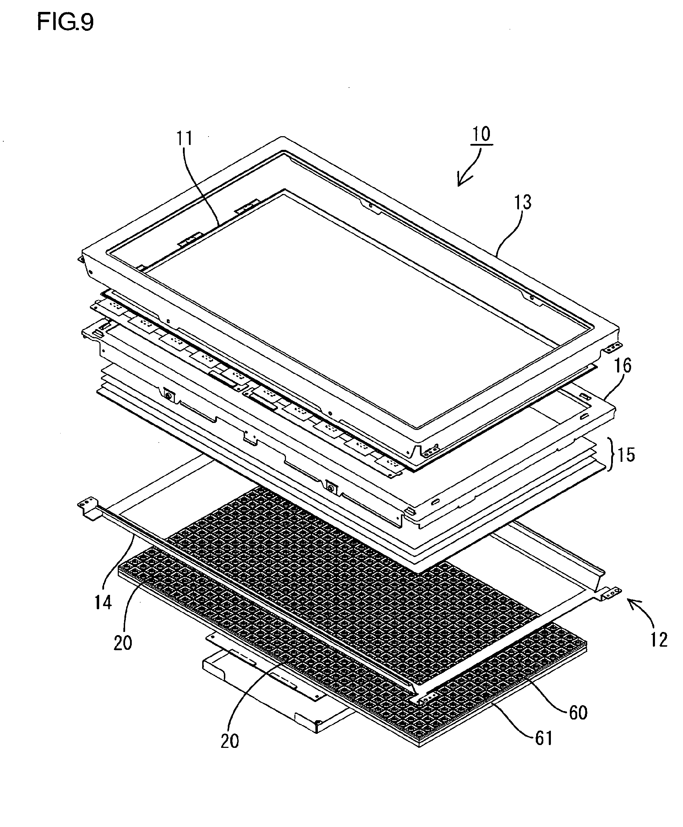

Next, a third embodiment in accordance with the present invention will be explained with reference to Fig. 9. The difference from the above-explained embodiments 1, 2 is in the aspect of attaching the LED substrates to the chassis. The other aspects are similar to the above-explained embodiments. Portions identical with the above-explained embodiments will be designated with the identical reference characters, while repetitive explanations will be omitted.
Fig. 9 is an exploded perspective view illustrating a schematic configuration of the liquid crystal display device of this embodiment.

As illustrated in Fig. 9, LED substrates 60 are disposed in lines on a single backlight substrate 61 with the adjacent LED substrates 60 close to each other. It is configured so that drive of the LED substrates 60 can be individually controlled, and the LED substrates 60 can be individually removed from the backlight substrate 61.

Such a liquid crystal display device 10 of this embodiment has the configuration that the illumination light is supplied by the single backlight substrate 61, which has the plurality of LED substrates 60 disposed thereon, attached to the chassis 14. This reduces the effort needed for the work to attach the LED substrates 60. This makes it possible to contribute to improvement of the efficiency in the assembly work.

Furthermore, in the case where the LED light sources 20 has trouble or has deteriorated, arising the need to replace the corresponding part, the part can be replaced by, first, removing the backlight substrate 61 from the chassis 14 and, next, removing the LED substrate 60 of the part that needs replacing. This makes it possible to improve the efficiency in the replacing work for the requiring part.

### <Fourth Embodiment>

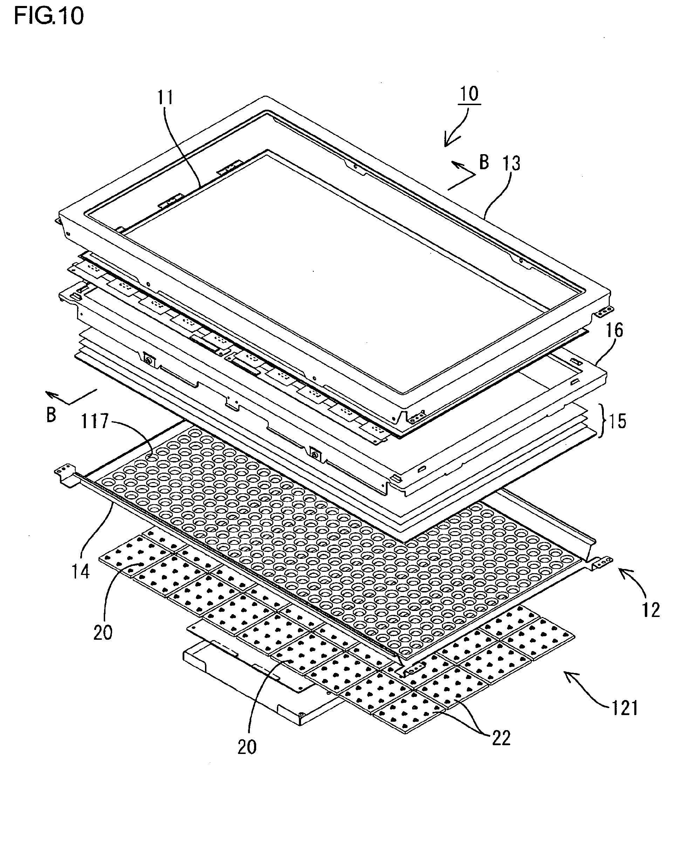

Next, a fourth embodiment in accordance with the present invention will be explained with reference to Figs. 10 through 12. The difference from the first embodiment is in that the chassis alone is provided with the reflector that is the light reflective mechanism. The other aspects are similar to the above-explained embodiment. Portions identical with the above-explained embodiment will be designated with the identical reference characters, while repetitive explanations will be omitted.

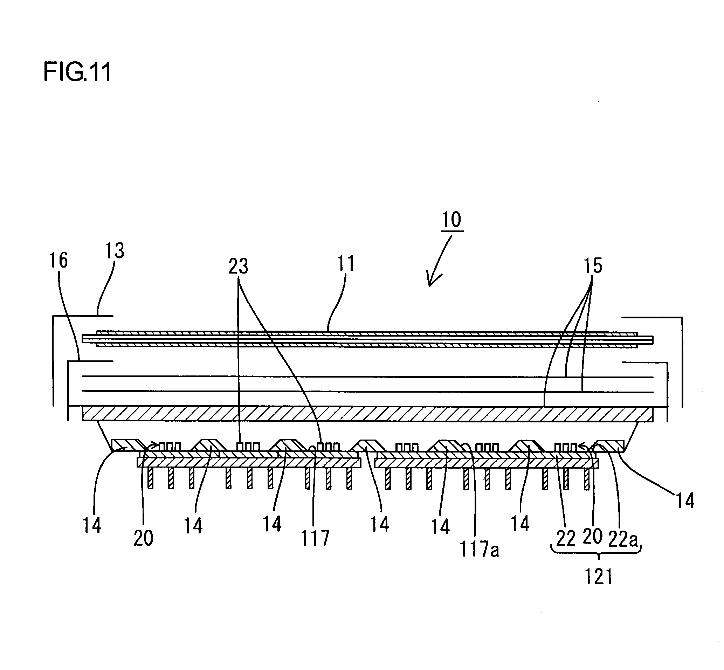

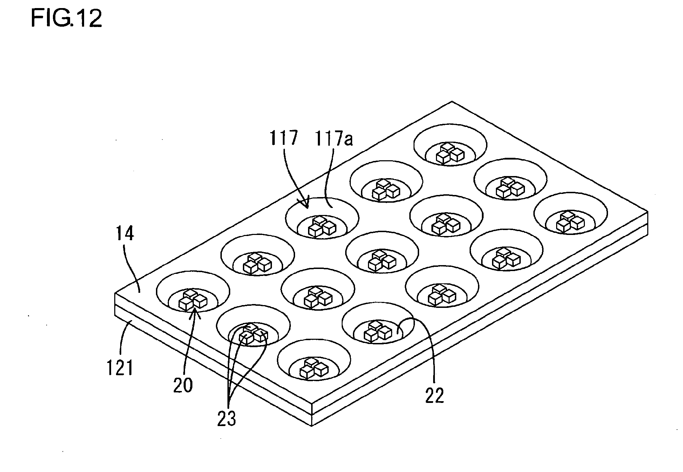

Fig. 10 is an exploded perspective view illustrating a schematic configuration of the liquid crystal display device that the television receiver of this embodiment includes (corresponding to Fig. 2 of the first embodiment). Fig. 11 is a view schematically illustrating a section along line B-B of the liquid crystal display device (the figure corresponding to Fig. 3 of the first embodiment). Fig. 12 is a perspective view illustrating an assembling relationship between LED substrates and the chassis.

Each LED substrate 121 is configured to have the LED light sources 20 arranged on a face thereof. Specifically, four (in the long-side direction of the LED substrate 121) by three (in the short-side direction) LED light sources 20 are disposed in lines.
Differently from the first embodiment, the spaces between the LED light sources 20, as well as an area surrounding the group of the LED light sources 20, have no reflectors allocated thereon.

On the other hand, the chassis 14 is formed with opening portions 117. The number of the opening portions 117 is same with the number of the LED light sources 20. The opening portions 117 are disposed in a pattern, and the pattern is a pattern of a relationship for the LED light sources 20 to be exposed when the chassis 14 and the LED substrates 121 are in a state assembled together. Each opening portion 117 is configured in a taper shape with the open area smaller in the front face side (the optical members 15 side) than in the back-face side (the substrate portions 22 side). That is, the opening portions 117 are configured with including inclined faces 117a having a reflector function to be capable of reflecting light toward the front face side (the optical members 15 side).

While the chassis 14 has the face opposed to the optical members 15, Fig. 11 illustrates a state of the LED substrates 121 of this embodiment attached to the chassis 14 from the opposite side from the face opposed to the optical members 15. Fig. 12 illustrates a main configuration thereof.
As illustrated in Fig. 11, the LED substrates 121 are adjacent to each other. Furthermore, the LED light sources 20 are in a state exposed to the optical members 15 side via the opening portions 117 formed in the chassis 14. The inclined faces 117a formed around the opening portions 117 of the chassis 14 are faces oriented toward the optical members 15 so as to reflect the light supplied from the groups of the LED light sources 20, which are exposed from the opening portions 117, toward the optical members 15.

With the backlight device 12 of this embodiment, the LED light sources 20 arranged on the LED substrates 121 are configured to be exposed from the opening portions 117 of the chassis 14, while the inclined faces 117a, which are formed around the opening portions 117 of the chassis 14, are caused to assume the reflector function to orient the light from the LED light sources 20 toward the optical members 15 side. Accordingly, a separate reflector is unnecessary. This makes it possible to contribute to cost reduction.

### <Other Embodiments>

While the embodiments in accordance with the present invention are illustrated as above, the present invention is not limited to the embodiments explained with reference to the drawings. For example, embodiments as follows are also included within the scope of the present invention:

(1) In the above-explained first embodiment, the inclined faces 17a of the cutouts 17 are painted white. As a means for improving the light reflectivity, the inclined faces 17a may consist of resin having light reflectivity. In this case, making the chassis by the resin is not the sole means; it is possible to adopt other means such as painting or adhering the resin on the side faces of the cutouts 17.

(2) In the above-explained embodiment 2, the reflectors 50 are made of metal. Not being limited to this, the reflectors 50 may be made of resin. In this case, considering effective use of the light supplied from the LED light sources, the light reflectance of the reflector made of the resin should be higher than the light reflectance of the LED substrates. Note that, as a means for adjusting the light reflectance of the reflector, it is possible to suitably add coloring matter material.

(3) In the above-explained embodiments, the LED substrates are provided with the heat sinks 33. A configuration provided with no heat sinks 33 is also possible. Note that the LED light sources 20 has the higher heat generation rate. Accordingly, considering prevention of deterioration or deformation of surrounding members, a heat releasing device such as the heat sink should be attached.

(4) In the configurations of the above-explained embodiments, the LED substrates 21 have the faces having the LED light sources 20 arranged thereon and the faces opposite from the faces having the LED light sources 20 arranged thereon, and the heat sinks 33 are provided on the faces opposite from the faces having the LED light sources 20 arranged thereon. The heat sinks 33 may be provided, for example, directly on lead frames on the surfaces of the LED substrates on the faces having the LED light sources 20 arranged thereon.

(5) In the above-explained embodiments, the heat sinks 33 are made of copper. The material that configures the heat sinks is not limited to this. In this case, considering the heat releasing efficiency, material that provides higher thermal conductivity of the heat sinks than the thermal conductivity of the substrate portions of the LED substrates should be selected.

(6) In the above-explained embodiments, each LED light source 20 has three LED chips 23 that emit light having respective single colors of R (red), G (green), and B (blue) and secured with resin. For example, white-light emitting LED light sources having three kinds (R, G, B) of chips mounted thereto may be used.
Furthermore, these display colors are not limited to the R, G, B; other colors may also be selected.

(7) In the above-explained embodiments, the LED light sources 20 emit light having respective single colors of R, G, and B. These colors may be obtained by a configuration having a combination of white-light emitting LED light sources with color filters to color the white light.

(8) In the above-explained embodiments, the liquid crystal display device using the liquid crystal panel as the display panel is illustrated. The present invention is applicable to a display device using a display panel of another type.

## Claims

1. A lighting device for a display device comprising:
a plurality of LED light sources;
an LED substrate having the plurality of LED light sources mounted thereon;
an optical member arranged on a light emission side of the LED sources; and
a chassis for supporting the plurality of LED light sources, wherein:
the chassis has a cutout; and
the LED substrate is attached to an opposite surface of the chassis from a surface that faces the optical member such that the LED light sources are exposed toward the optical member side through the cutout.

2. A lighting device for a display device according to claim 1, further comprising a heat sink provided on the LED substrate for releasing heat that is generated accompanying lighting of the plurality of LED light sources.

3. A lighting device for a display device according to claim 2, wherein:
the heat sink is provided on a surface of the LED substrate, the surface opposite from the surface on which the LED light sources are mounted.

4. A lighting device for a display device according to claim 2 or 3, wherein:
the LED substrate has a substrate portion on which the LED light source is mounted; and
the heat sink is made of a material having a thermal conductivity higher than a thermal conductivity of the substrate portion of the LED substrate.

5. A lighting device for a display device according to any one of claims 1 to 5, further comprising a reflector having a reflective surface that faces toward the optical member on a surface of the LED substrate, the surface on which the LED light sources are mounted.

6. A lighting device for a display device according to claim 5, wherein:
the reflector is made of metal; and
a light reflectance of the reflector is higher than a light reflectance of the LED substrate.

7. A lighting device for a display device according to claim 5 or 6, wherein at least the reflective surface of the reflector is painted in a pale color including white.

8. A lighting device for a display device according to claim 5, wherein:
the reflector is made of resin; and
a light reflectance of the reflector is higher than a light reflectance of the LED substrate.

9. A lighting device for a display device according to any one of claims 1 to 8, wherein the chassis has an inclined side surface around the cutout that is inclined so as to face toward the optical member.

10. A lighting device for a display device according to claim 9, wherein a light reflectance of the inclined side surface is higher than a light reflectance of a portion of the chassis, the portion excluding the inclined side surface.

11. A lighting device for a display device according to claim 9 or 10, wherein the inclined side face is made of resin having light reflectivity.

12. A lighting device for a display device according to any one of claims 9 to 11, wherein the inclined side face is painted in a pale color including white.

13. A display device comprising:
a lighting device for a display device according to any one of claims 1 to 12; and
a display panel that provides display using light from the lighting device for a display device.

14. A display device according to claim 13, wherein the display panel is a liquid crystal panel using liquid crystal.

15. A television receiver comprising a display device according to claim 13 or 14.
